# EUROPEAN PATENT SPECIFICATION

(11) **EP 2 952 945 B1**
(45) Date of publication and mention of the grant of the patent: **19.10.2016**
(21) Application number: 14171320.6
(22) Date of filing: 05.06.2014
(51) Int. Cl.: G02B 7/00, G02B 27/01, B60R 11/02

(54) **Mounting device and vehicle**
Befestigungsvorrichtung und Fahrzeug
Dispositif de fixation et véhicule

(43) Date of publication of application: 09.12.2015
(73) Proprietor: Johnson Controls Automotive Electronics GmbH, 75196 Remchingen (DE)
(72) Inventor: Mayer, Ralf, 67295 Bolanden (DE); Hervy, Sebastien, 60240 Liancourt-Saint-Pierre (FR); Ludewig, Bernd, 69469 Weinheim (DE); Killguss, Werner, 75389 Neuweiler (DE)
(74) Representative: Finger, Catrin

(56) References cited:
- US-A1- 2005 110 245
- US-A1- 2009 086 329
- US-A1- 2014 054 430

## Description

The invention relates to a mounting device for at least one component of a head-up display. The invention further relates to a vehicle with a mounting device.

DE 102 19 474 B4 describes a motion and locking mechanism for extendible device parts, with a drive and a movable basic carrier. A sliding transmission element coupled to the drive is arranged on the basic carrier and has a first translatory position and a second translatory position, such that the transmission element is designed in the second translatory position for fixing a locking element.

US2009/0086329 A1 describes a mounting device for head-up display components, comprising a frame that is made from a metallic material and wherein the frame comprises at least two first projecting elements, whereby at least one of the first projecting elements comprises a first fixing element adapted to releasably engage a first reflection component.

It is an object of the present invention to provide an improved mounting device for at least one component of a head-up display and an improved vehicle with such a mounting device.

The object is achieved by a mounting device according to claim 1 and by a vehicle according to claim 9.

Preferred embodiments of the invention are given in the dependent claims.

A mounting device for at least one component of a head-up display comprises a basic carrier that is made from a metallic material and a number of fixing elements that are made from a polymer material, whereby the fixing elements are moulded onto the basic carrier. The present invention provides that the basic carrier comprises at least two first projecting elements, whereby at least one of the first projecting elements comprises a first fixing element that is adapted to engage a first reflection component.

The hybrid design of the mounting device that is made from metal and polymer bestows stiffness upon the mounting device so that the first reflection element of the head-up display may be arranged in a mechanically stable manner. Furthermore, the fixing elements may be designed with more precision when they are made from polymer as if they would be designed from metal. This also allows forming fixing elements that require features with complex shapes, for example hinges. Moreover, the provided mounting simplifies a mounting of the mounting device into a vehicle, i. e. a dashboard, according to the related art.

In a further exemplary embodiment, the basic carrier comprises two second projecting elements that are arranged opposite to the first projecting elements, whereby the second projecting elements are adapted to hold a second reflection element, i. e a further mirror that is arranged opposite the first reflection element. The first and second projecting elements are further formed as mounting flanges for coupling of the basic carrier with a fix component, i. e. a vehicle dashboard and/or a chassis frame.

The first fixing element is designed as a first locking element, whereby the first locking element is formed as a lever that locks the first reflection component in a desired position. The first reflection element is maybe rotatable around an axis so that it is individually adjustable. The first locking element fixes the first reflection element in a position that is desired by a user.

At least one of the second projecting elements comprises a second fixing element that is designed as a second locking element. The second locking element allows fixing the second reflection element in a desired position during assembly.

Because the fixing elements are made from a polymer material, the shape of the fixing elements may comprise more complex features as if it would be made from metal. With this, the second locking element may be formed as a clamp to fix the second reflection element in a desired position.

The polymer material of the fixing elements may allow further applications. In an exemplary embodiment, a third fixing element and a fourth fixing element are adapted to support the projecting elements by coupling the basic carrier with the fix component. The coupling of the mounting device with the vehicle component may be successful in a mechanically stable manner due to the moulded fixing elements that may comprise more complex shapes than metallic fixing elements.

In a further exemplary embodiment, a fifth fixing element is adapted to accommodate a stepper motor of the head-up display. The stepper motor may be accommodated in a mechanically stable manner thus allowing a reliable operation of the head-up display.

The present invention further provides a vehicle that comprises a mounting device as it is described above and at least one head-up display. The head-up display that is arranged within the vehicle in a mechanically stable manner due to the design of the mounting device, allows imaging of information into a view field of a user.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given herein below and the accompanying drawings which are given by way of illustration only, and thus, are not limitative of the present invention, and wherein:
- Figure 1: schematically a perspective view of a mounting device and
- Figure 2: schematically a further perspective view of the mounting device.

Corresponding parts are marked with the same reference symbols in all figures.

### Detailed Description of Preferred Embodiments

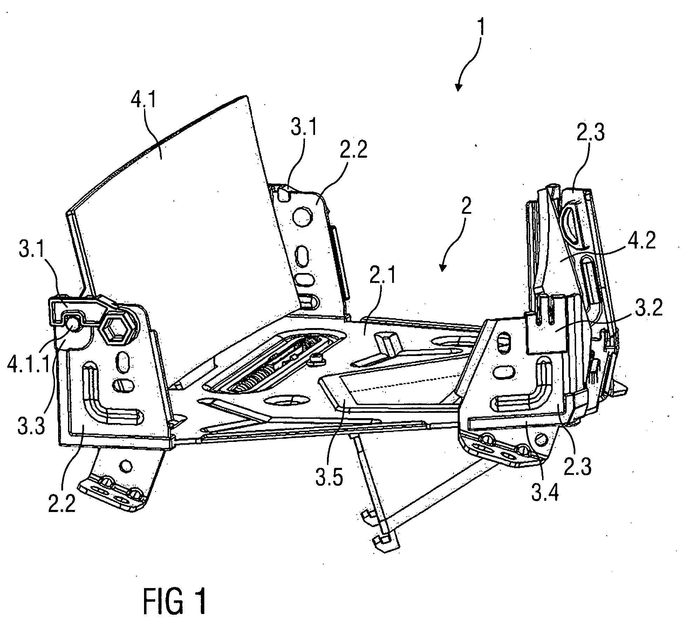

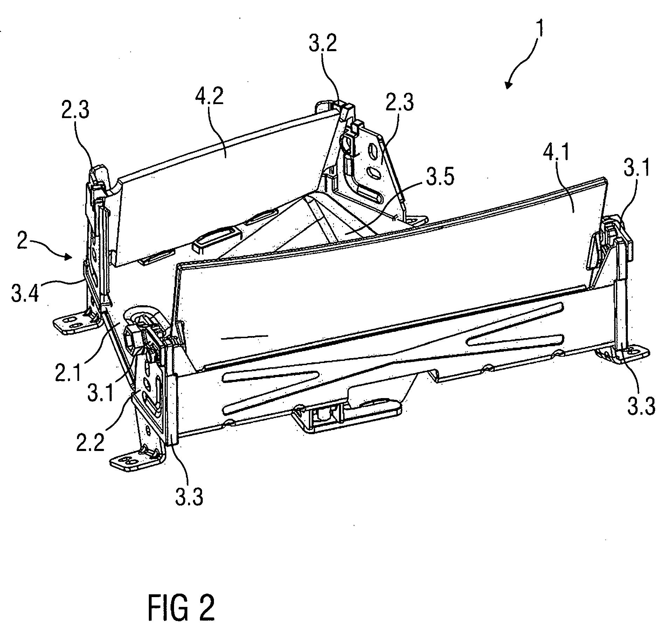

**The** **figures 1** **and** **2** show different perspective views of a mounting device 1 that is provided to hold a head-up display.

The mounting device 1 comprises a basic carrier 2 and a number of fixing elements 3.

The basic carrier 2 is made from a metal material and comprises a plate 2.1 with gaps and projecting elements 2.2, 2.3 that project rectangularly from the plate 2.1. The basic carrier 2 may be manufactured by punching and bending. The projecting elements 2.2, 2.3 represent a pair of mounting flanges respectively for coupling the basic carrier 2 with a fix component, i. e a chassis frame and/or a vehicle dashboard.

The fixing elements 3.1 to 3.5 are made from a polymer material and moulded onto to the basic carrier 2, in particular by an injection moulding process. The fixing elements 3.1 to 3.5 may be made from the same polymer material or from different polymer materials.

A first reflection element 4.1 is arranged between two first projecting elements 2.2 that comprise a first fixing element 3.1 respectively. The first fixing elements 3.1 are respectively designed as a first locking element each formed as a locking lever comprising a recess to enclose an axis 4.1.1 of the first reflection element 4.1.

The first reflection element 4.1 is arranged between the first projecting elements 2.2, whereby the first reflection element 4.1 is rotatable around the axis 4.1.1. The axis 4.1.1 is directed rectangularly to a length expansion of the first projecting elements 2.2.

In the present embodiment, the first reflection element 4.1 is a component of the head-up display and is designed as a flat mirror that is adapted to direct light from one or more not shown light sources into a desired direction, in particular into a view field of a user. A rotation of the first reflection element 4.1 may be used for an individual adjustment of a user within the vehicle. The first fixing elements 3.2 lock the first reflection element 4.1 in a desired position.

The first reflection element 4.1 receives the light from the second reflection element 4.2 that is arranged opposite the first reflection element 4.1. The second reflection element 4.2 is arranged between two second projection elements 2.3 that comprise a second fixing element 3.2. The second fixing elements 3.2 are designed as a second locking element respectively for fixing the second reflection element 4.2 in a desired position. The second locking element may be formed as a clamp or a clip.

In the present embodiment, the second reflection element 4.2 is designed as a mirror with smaller dimensions than the first reflection element 4.1. The second reflection element 4.2 reflects the light from the light sources towards the first reflection element 4.1 and thus represents a counter mirror of the first reflection element 4.1. The second reflection element 4.2 is tilted around an axis that is directed nearly rectangularly to a length expansion of the second projecting elements 2.3. The tilted position of the second reflection element 4.2 is fixed by the second fixing elements 3.2 as it is described above.

The first projecting elements 2.2 further comprise a third fixing element 3.3 respectively that are moulded onto an edge area of the first projecting elements 2.2 and that are adapted to accommodate the axis 4.1.1 of the first reflection element 4.1. The second projecting elements 2.3 comprise a fourth fixing element 3.4 respectively, analogous to the first projecting elements 2.2. The fourth fixing elements 3.4 are moulded onto an edge area of the second projecting elements 2.3.

The third fixing elements 3.3 and the fourth fixing elements 3.4 may be further used for an assembly of the mounting device 1, i. e. into a vehicle dashboard, whereby the third fixing elements 3.3 are used for coupling the mounting device 1 with a chassis frame and the fourth fixing elements 3.4 for coupling the mounting device 1 with a dashboard component.

One of the gaps arranged within the plate 2.1 incorporates a fifth fixing element 3.5 that is adapted to accommodate a stepper motor of the head-up display for tilting the reflection elements 4.1, 4.2. The fifth fixing element 3.5 may be coupled with an electronic component, e. g. a flat cable, for controlling the stepper motor. The fifth fixing element 3.5 may also realize a component of a tilt mechanism controlled by the stepper motor for tilting the first reflection element 4.1 and/or the second reflection element 4.2, i. e. a hinge or a gear.

### List of References

- 1: mounting device
- 2: basic carrier
- 2.1: plate
- 2.2: first projecting element
- 2.3: second projecting element
- 3.1: first fixing element
- 3.2: second fixing element
- 3.3: third fixing element
- 3.4: fourth fixing element
- 3.5: fifth fixing element
- 4.1: first reflection element
- 4.2: second reflection element

## Claims

1. Mounting device (1) for at least one component of a head-up display, comprising:
- a basic carrier (2) that is made from a metallic material and
- a number of fixing elements (3.1 to 3.5) that are made from a polymer material, whereby the fixing elements (3.1 to 3.5) are moulded onto the basic carrier (2),
**characterized in that** the basic carrier (2) comprises at least two first projecting elements (2.2), whereby at least one of the first projecting elements (2.2) comprises a first fixing element (3.1) adapted to releasably engage a first reflection component (4.1).

2. Mounting device (1) according to claim 1,
**characterized in that** the basic carrier (2) comprises two second projecting elements (2.3) that are arranged opposite to the first projecting elements (2.2), whereby the second projecting elements (2.3) adapted to tightly engage a second reflection element (4.2).

3. Mounting device (1) according to claim 1 or 2,
**characterized in that** the first fixing element (3.1) is designed as a first locking element.

4. Mounting device according to claim 3,
**characterized in that** the first locking element is formed as a lever that locks the first reflection component (4.1) in a desired position.

5. Mounting device (1) according to one of the preceding claims,
**characterized in that** at least one of the second projecting elements (2.3) comprises a second fixing element (3.2) that is designed as a second locking element.

6. Mounting device (1) according to one of the preceding claims,
**characterized in that** the second locking element is formed as a clamp.

7. Mounting device (1) according to one of the preceding claims,
**characterized in that** a third fixing element (3.3) and a fourth fixing element (3.4) are adapted to couple the basic carrier (2) with a fixed vehicle component.

8. Mounting device (1) according to one of the preceding claims,
**characterized in that** a fifth fixing element (3.5) is adapted to accommodate a stepper motor of the head-up display.

9. Vehicle, comprising a mounting device (1) according to the claims 1 to 8 and at least one head-up display.

## Patentansprüche

1. Befestigungsvorrichtung (1) für mindestens eine Komponente einer Frontscheibenanzeige, aufweisend:
- einen Basisträger (2), welcher aus einem metallischen Material hergestellt ist und
- eine Anzahl von Befestigungselementen (3.1 bis 3.5), welche aus einem Polymermaterial hergestellt sind, wobei die Befestigungselemente (3.1 bis 3.5) auf dem Basisträger (2) angeformt sind,
**dadurch gekennzeichnet, dass** der Basisträger (2) mindestens zwei erste hervorstehende Elemente (2.2) aufweist, wobei mindestens eines der zwei hervorstehenden Elemente (2.2) ein erstes Befestigungselement (3.1) aufweist, welches dafür angepasst ist, mit einer ersten Reflexionskomponente (4.1) lösbar in Eingriff zu kommen.

2. Befestigungsvorrichtung (1) nach Anspruch 1,
**dadurch gekennzeichnet, dass** der Basisträger (2) zwei zweite hervorstehende Elemente (2.3) aufweist, welche gegenüber den ersten hervorstehenden Elementen (2.2) angeordnet sind, wobei die zweiten hervorstehenden Elemente (2.3) dafür angepasst sind, mit einer zweiten Reflexionskomponente (4.2) fest in Eingriff zu kommen.

3. Befestigungsvorrichtung (1) nach Anspruch 1 oder 2,
**dadurch gekennzeichnet, dass** das erste Befestigungselement (3.1) als ein erstes Verriegelungselement ausgelegt ist.

4. Befestigungsvorrichtung nach Anspruch 3,
**dadurch gekennzeichnet, dass** das erste Verriegelungselement als ein Hebel ausgebildet ist, welcher die erste Reflexionskomponente (4.1) in einer gewünschten Position verriegelt.

5. Befestigungsvorrichtung (1) nach einem der vorhergehenden Ansprüche, **dadurch gekennzeichnet, dass** mindestens eines der zweiten hervorstehenden Elemente (2.3) ein zweites Befestigungselement (3.2) aufweist, welches als ein zweites Verriegelungselement ausgelegt ist.

6. Befestigungsvorrichtung (1) nach einem der vorhergehenden Ansprüche, **dadurch gekennzeichnet, dass** das zweite Verriegelungselement als eine Klammer ausgebildet ist.

7. Befestigungsvorrichtung (1) nach einem der vorhergehenden Ansprüche, **dadurch gekennzeichnet, dass** ein drittes Befestigungselement (3.3) und ein viertes Befestigungselement (3.4) dafür angepasst sind, den Basisträger (2) mit einer festen Fahrzeugkomponente zu koppeln.

8. Befestigungsvorrichtung (1) nach einem der vorhergehenden Ansprüche, **dadurch gekennzeichnet, dass** ein fünftes Befestigungselement (3.5) dafür angepasst ist, einen Schrittmotor der Frontscheibenanzeige aufzunehmen.

9. Fahrzeug, aufweisend eine Befestigungsvorrichtung (1) nach den Ansprüchen 1 bis 8 und mindestens eine Frontscheibenanzeige.

## Revendications

1. Dispositif de fixation (1) pour au moins un composant d'un affichage tête haute, comprenant :
- un support de base (2) qui est fabriqué à partir d'un matériau métallique et
- un certain nombre d'éléments de fixation (3.1 à 3.5) qui sont fabriqués à partir d'un matériau polymère, les éléments de fixation (3.1 à 3.5) étant moulés sur le support de base (2),
**caractérisé en ce que** le support de base (2) comprend aux moins deux premiers éléments saillants (2.2), au moins l'un des premiers éléments saillants (2.2) comprenant un premier élément de fixation (3.1) prévu pour venir en prise de manière amovible avec un premier composant réfléchissant (4.1).

2. Dispositif de fixation (1) selon la revendication 1,
**caractérisé en ce que** le support de base (2) comprend deux deuxièmes éléments saillants (2.3) qui sont disposés à l'opposé des premiers éléments saillants (2.2), les deuxièmes éléments saillants (2.3) étant prévus pour s'engager étroitement avec un deuxième élément réfléchissant (4.2).

3. Dispositif de fixation (1) selon la revendication 1 ou 2,
**caractérisé en ce que** le premier élément de fixation (3.1) est conçu sous forme de premier élément de verrouillage.

4. Dispositif de fixation selon la revendication 3,
**caractérisé en ce que** le premier élément de verrouillage est formé en tant que levier qui verrouille le premier composant réfléchissant (4.1) dans une position souhaitée.

5. Dispositif de fixation (1) selon l'une des revendications précédentes,
**caractérisé en ce qu'**au moins l'un des deuxièmes éléments saillants (2.3) comprend un deuxième élément de fixation (3.2) qui est conçu en tant que deuxième élément de verrouillage.

6. Dispositif de fixation (1) selon l'une des revendications précédentes,
**caractérisé en ce que** le deuxième élément de verrouillage est formé sous forme de pince.

7. Dispositif de fixation (1) selon l'une des revendications précédentes,
**caractérisé en ce qu'**un troisième élément de fixation (3.3) et un quatrième élément de fixation (3.4) sont prévus pour accoupler le support de base (2) à un composant fixe de véhicule.

8. Dispositif de fixation (1) selon l'une des revendications précédentes,
**caractérisé en ce qu'**un cinquième élément de fixation (3.5) est prévu pour recevoir un moteur pas à pas de l'affichage tête haute.

9. Véhicule comprenant un dispositif de fixation (1) selon les revendications 1 à 8 et au moins un affichage tête haute.
